# EUROPÄISCHE PATENTSCHRIFT

(11) **EP 2 219 838 B1**
(45) Veröffentlichungstag und Bekanntmachung des Hinweises auf die Patenterteilung: **23.04.2014**
(21) Anmeldenummer: 08863648.5
(22) Anmeldetag: 18.12.2008
(51) Int. Cl.: B29B 15/08, B29C 47/00, B29C 47/10, C08J 5/04, B29B 9/14, B29K 105/06, B29K 201/00, B29K 601/00

(54) **PRESSLINGE AUS CELLULOSISCHEN SPINNFASERN, DEREN HERSTELLUNG UND VERWENDUNG**
PRESSED ARTICLES FROM CELLULOSE STAPLE FIBERS, THE PRODUCTION AND USE THEREOF
PIÈCES MOULÉES EN FIBRES CELLULOSIQUES FILÉES, LEUR FABRICATION ET LEUR UTILISATION

(30) Priorität: 21.12.2007 AT 21032007
(43) Veröffentlichungstag der Anmeldung: 25.08.2010
(73) Patentinhaber: Lenzing AG, 4860 Lenzing (AT)
(72) Erfinder: SUCHOMEL, Friedrich, A-4861 Schörfling (AT); BURGSTALLER, Christoph, A-4600 Wels (AT); STADLBAUER, Wolfgang, A-4075 Breitenaich (AT)
(74) Vertreter: Hanemann, Otto
(86) Internationale Anmeldenummer: PCT/AT2008/000461
(87) Internationale Veröffentlichungsnummer: WO 2009/079677

(56) Entgegenhaltungen:
- WO-A-2006/032406
- US-A1- 2003 186 052
- US-A1- 2003 228 454

## Beschreibung

Die Erfindung betrifft gut dosierbare Formkörper aus cellulosischen Fasern, deren Herstellung sowie deren Verwendung zur Herstellung von Verbundmaterialien durch Dosierung der cellulosischen Fasern in Schmelzen, insbesondere mittels Mischaggregaten.

Cellulosische Fasern werden in zunehmendem Maße zur Verstärkung von Matrixmaterialien wie Polypropylen oder anderen Polymeren in Verbundwerkstoffen verwendet und ersetzen dort beispielsweise Glasfasern. Die Vorteile von cellulosischen Fasern gegenüber Glasfasern liegen in deren geringerem spezifischen Gewicht sowie in der verbesserten Entsorgbarkeit, da sie sich beispielsweise zusammen mit dem Matrixmaterial leicht verbrennen lassen oder im Falle biologisch abbaubarer Matrixmaterialien zusammen mit diesen abgebaut werden.

Geeignete cellulosische Fasern können auf unterschiedlichem Wege hergestellt werden. Am einfachsten ist die Verwendung von Baumwolle und anderen Naturfasern wie Hanf oder Flachs, die bereits von Natur aus faserförmig vorliegen. Problematisch ist dabei jedoch die den Naturprodukten inhärente Ungleichmäßigkeit der Fasern bei Dicke, Länge und Oberflächenbeschaffenheit. Diese Ungleichmäßigkeiten verursachen eine aufwendigere Verarbeitung. So müssen sie gegebenenfalls auf eine gleichmäßige Länge geschnitten werden. Abgesehen von der Baumwolle sind die Naturfasern für Hochleistungsverbundwerkstoffe außerdem zu grob, so dass sich keine einheitliche Verteilung im Matrix-Werkstoff und keine ausreichende Oberfläche zwischen Faser und Matrix ergibt. Viele der Naturfasern neigen zusätzlich zu starkem Vergilben oder weisen einen unangenehmen Geruch auf.

Ebenso ist die Verwendung von Zellstofffasern möglich, die auf bekanntem Wege mittels Zellstoffkochverfahren aus Holz hergestellt werden. Handelsübliche Zellstoffe werden jedoch nach der Herstellung in Blätter bzw. Rollen verpreßt und getrocknet. Die Fasern lassen sich anschließend sehr schlecht aus dem verpreßten Blatt vereinzeln. Zudem hängt die Reinheit des Zellstoffes von der Art der Kochung ab sowie davon, ob Papier- oder Chemiezellstoff verwendet wird. Dies wiederum wirkt sich auf die Festigkeiten sowohl der Einzelfaser als auch des fertigen Verbundwerkstoffs aus. Lignin als Begleitstoff insbesondere in billigen Zellstoffen stört, da sich ein so hergestellter Verbundwerkstoff dunkelbraun verfärben kann. Weiterhin zersetzt sich das Lignin, das thermisch nur bis etwa 150°C im Verformungsprozess stabil ist, und führt zu Emissionen, welche diese Verbundwerkstoffe von vielen Anwendungen, z.B. im Automotive Innenraum, ausschließen.

Durch ebenfalls bekannte Spinnverfahren lassen sich dagegen besser definierte und in ihren Eigenschaften verbesserte und an den Verwendungszweck angepasste cellulosische Kunstfasern wie Viskose oder Lyocell herstellen.

Die cellulosischen Fasern werden üblicherweise über eine Dosierschnecke in einen Extruder eingebracht und dort mit dem Polymer gemischt. Aufgrund der guten Faser-Faser-Haftung sind die einzelnen Fasern jedoch nur schlecht rieselfähig und es kann beispielsweise zur sogenannten Brückenbildung im Dosiertrichter der Dosierschnecke und nachfolgender Verstopfung kommen. Das hat zur Folge, dass die Fasern nur sehr ungleichmäßig dosiert werden können, was wiederum zur Folge hat, dass es erhebliche Qualitätsschwankungen beim faserverstärkten Polymer gibt.

Es gab daher bereits Ansätze zur Verbesserung der Dosierfähigkeit dieser cellulosischen Fasern. So beschreibt beispielsweise die WO 2006/032406 die Behandlung eines Spinnfaserstrangs mit einer wässrigen Dispersion zum Aufbringen einer Schlichte. Mit dieser Schlichte wird ein Zusammenhalt der einzelnen Fasern geschaffen. Anschließend wird dieser schlichtehaltige Strang zu rieselfähigen Faserbündeln zerkleinert. Dieses Verfahren hat den Nachteil, dass mit den Faserbündeln ein zusätzlicher Stoff, nämlich die Schlichte, in die Verbundwerkstoffe eingebracht wird. Dort kann sie die mechanischen Eigenschaften, insbesondere die Faser-Matrix-Wechselwirkungen, die für die Wirksamkeit der Faserverstärkung wesentlich sind, in unerwünschtem Maß beeinflussen. Zudem erfordert das Verfahren der WO 2006/032406 umfangreiche Eingriffe direkt an der Spinnmaschine wie beispielsweise das Aufbringen und Trocknen der Schlichte oder das Zusammenführen und Verdrillen mehrerer Spinnfaserstränge vor der Schneidemaschine. Durch das Verdrillen verschlechtert sich die Öffnungswilligkeit der Bündel.]

Die WO 2006/032 406 offenbart ein Produkt gemäß dem Oberbegriff des Anspruchs 1 sowie ein Verfahren gemäß dem Oberbegriff des Anspruchs 5.

Eine ebenfalls bekannte Oberflächenbeschichtung der Fasern dient dazu, die Faser-Faser-Haftung zu vermindern. Dazu werden die Fasern mit einer gleitfähigkeitserhöhenden Avivage, meist einem Silikonöl, beschichtet. Diese avivierten Fasern lassen sich zwar besser dosieren als nicht avivierte, ansonsten aber vergleichbare Fasern und sie lassen sich auch besser in dem Matrix-Polymer verteilen. Aber auch diese Avivage kann sich nachteilig auf die Faser-Matrix-Wechselwirkungen auswirken und muss daher speziell für diesen Anwendungszweck abgestimmt werden. Außerdem bleiben weitere Nachteile von einzelnen Kurzfasern bestehen, wie z. B. das staubartige Verfliegen beim Schütten, die geringe Schüttdichte, etc.

Die EP 1436130 sowie die WO 03/016011 offenbaren sogenannte Pultrusionsverfahren, in denen ein Spinnfaserstrang zunächst gemeinsam mit dem Matrixpolymer durch eine Düsenöffnung austritt, dabei mit dem Matrixpolymer ummantelt wird und der erstarrte Strang anschließend zu Granulat zerkleinert wird, das sich gut dosieren lassen soll. Diese Pultrusionsverfahren erfordern neben einem erheblichen Aufwand für die Pultrusionseinheit auch eine frühe Festlegung auf das Matrix-Polymer, dem die cellulosische Faser zugemischt werden soll.

Eine weitere Variante zur Herstellung von leicht dosierbaren Granulaten, die sowohl Verstärkungsfasern als auch ein thermoplastisches Matrix-Polymer enthalten, ist in EP 1097033 beschrieben. Hierbei wird ein Strang, der sowohl das Verstärkungsfasermaterial, beispielsweise cellulosische oder auch mineralische Fasern als auch das Matrixpolymer jeweils in Form endloser Filamente enthält, durch eine beheizte Öffnung gezogen, so dass die Matrixfilamente (teilweise) schmelzen und die Verstärkungsfasern in die geschmolzene Masse eingebunden werden. Gleichzeitig wird der Faserstrang beim Durchziehen verdreht, so dass die Verstärkungsfasern spiralförmig in dem anschließend zu Granulat geschnittenen Strang vorliegen. Diese spiralförmige Lage bewirkt, dass die Verstärkungsfasern eine größere Länge aufweisen als die einzelnen Granulatteilchen selbst. Dieses Verfahren soll im Vergleich zum einfachen Pultrusionsverfahren energetisch günstiger sein, hat aber ansonsten die gleichen prinzipiellen, oben bereits genannten Nachteile.

Die Aufgabe der vorliegenden Erfindung bestand daher darin, cellulosische Fasern in einer solchen Art und Weise zur Verfügung zu stellen, dass die cellulosischen Fasern im Vergleich zum bekannten Stand der Technik besser dosierbar sind und gleichzeitig die Verstärkungseigenschaften dieser Fasern im Verbundmaterial verbessert werden, ohne größere Mengen an unerwünschten Zusatzstoffen in das Verbundmaterial einzuschleppen.

Diese Aufgabe konnte überraschend gelöst werden durch die Merkmale der Ansprüche 1, 5 und 10.

Die Länge der Presslinge ist für den Erfolg der Erfindung nicht entscheidend. Bei dem unten beschriebenen Verfahren zur Herstellung der Presslinge entstehen diese jedoch meist in einer Länge von 1,0 - 30,0 mm. Da sie nicht durch Bindemittel oder Schlichte zusammengehalten werden, können sie sogar zu Stäbchen kürzerer Länge zerbrechen, ohne dass dies die spätere Dosierfähigkeit beeinträchtigt.

Die Spinnfasern können vor dem Verpressen mit einer Gleitavivage überzogen werden. Dabei ist auf einen möglichst geringen Avivagegehalt zu achten, um wie oben beschrieben die späteren Verbundmaterialeigenschaften möglichst wenig zu beeinflussen. Im Allgemeinen sollte ein Avivagegehalt von 1 %, bezogen auf die Gesamtmasse der trockenen, avivierten Fasern nicht überschritten werden. Außerdem richtet sich die Art der Gleitavivage nach dem jeweils vorgesehenen Matrixpolymeren. So ist beispielsweise eine apolare Avivage für die Verwendung in apolaren thermoplastischen Matrixpolymeren sehr gut geeignet. Überraschenderweise können aus den mit Gleitavivage versehenen Spinnfasern die erfindungsgemäßen Pellets hergestellt werden, die trotz der Gleitavivage nicht sofort wieder zerfallen.

Die Stabilität der Pellets kann, falls gewünscht, insbesondere durch das Zumischen von etwa 0,01 bis 5 Gew.% eines handelsüblichen Schmelzklebers zu den Fasern erhöht werden. Der Schmelzkleber kann in Pulverform vor dem Pelletieren mit den Fasern vermischt werden. Im späteren Verbundwerkstoff wirken sich diese geringen Mengen an Schmelzkleber erfahrungsgemäß nicht negativ aus.

Für spezielle Anwendungen kann bereits bei der Herstellung der Presslinge ein Anteil eines Polymeren und/oder auch eines oder mehrerer anderer Additive wie beispielsweise Haftvermittler zugegeben werden. Als Haftvermittler zwischen Cellulose und Polypropylen eignet sich unter anderem MAPP (Maleinsäureanhydrid-gepfropftes Polypropylen). Weitere Beispiele für mögliche Additive sind alle in der Kunststoffverarbeitung üblichen Zusatzstoffe, wie z.B. Stabilisatoren, Farbstoffe, UV-Schutz, Pigmente und Eigenschaftsverbesserer wie z.B. Schlagzähigkeitsmodifikatoren.

Hauptsächlich ist die Erfindung auf Presslinge gerichtet, die noch keinen Anteil eines Matrixpolymeren enthalten.

Gegenstand der vorliegenden Erfindung ist auch ein Verfahren zur Herstellung von Presslingen aus cellulosischen Spinnfasern, die im Vergleich zum bekannten Stand der Technik besser dosierbar sind und gleichzeitig die Verstärkungseigenschaften dieser Fasern im Verbundmaterial verbessern.

Dieses Verfahren besteht darin, dass cellulosische Spinnfasern mit einem Titer im Bereich 0,1 bis 15,0 dtex und einer Schnittlänge im Bereich 0,5 bis 15,0 mm in einer Formgebungseinrichtung durch Formgebungskanäle gepresst werden. Ein wesentliches Merkmal des erfindungsgemäßen Verfahrens ist das UD-Verhältnis dieser Formgebungskanäle. Es sollte zwischen 1:1 und 4:1, bevorzugt zwischen 1:1 und 3:1 betragen, wobei L die Länge und D der Durchmesser des zylindrischen Teils eines Formgebungskanals ohne Einlauf- und Entlastungskonus ist. Dieses UD-Verhältnis beeinflusst wesentlich die Verdichtung, die die Spinnfasern im Pressling erfahren. Dies hat Auswirkungen auf die Wiederauflösbarkeit der Presslinge sowie auf die beim Pressen stattfindende Faserschädigung. Die erhaltenen Presslinge weisen einen Durchmesser von 2,0 bis 10,0 mm sowie eine Länge von meistens 1,0 - 30,0 mm auf.

Die cellulosischen Spinnfasern können nach jedem der hierfür allgemein bekannten Verfahren ersponnen werden. Nach den jeweils erforderlichen Koagulations-, Wasch- und eventuell weiteren Nachbehandlungsschritten wird der Faserstrang mittels dem Fachmann bekannter Stapelfaserschneidmaschinen auf die gewünschte Länge geschnitten und auf den erforderlichen Feuchtegehalt getrocknet. Je nach den Gegebenheiten vor Ort werden die Fasern, beispielsweise für einen Transport, auch auf geringe Feuchtegehalte getrocknet und vor dem Verpressen wieder auf den notwendigen Wert befeuchtet, beispielsweise durch Besprühen. Je nach Erfordernis wird auf die Fasern eine Gleitavivage aufgebracht.

Bevorzugt werden die cellulosischen Spinnfasern nach dem Viskose-, Modal- oder Lyocell-Verfahren hergestellt. Auch Mischungen aus mindestens zwei dieser Faserarten können gemeinsam zu Presslingen verarbeitet werden.

Um die Schädigung der Spinnfasern gering und die Wiederauflösbarkeit beim Einmischen in das Matrix-Polymer hoch zu halten, ist in den Fasern vor dem Pelletiervorgang eine Feuchte von 30 bis 80 Gew.-% Wasser einzustellen. Das Wasser wird nur zur Herstellung der Pellets verwendet. Es dient sozusagen als Weichmacher für die Fasern. Das Wasser trocknet teilweise beim Pelletiervorgang, der aufgrund der wirkenden mechanischen Kräfte und Reibung Wärme entwickelt, wieder ab. Die Pellets werden im Anschluß auf Konditionierfeuchte getrocknet.

Wenn die Fasern vor dem Pelletiervorgang mit einer Gleitavivage, insbesondere einem Silikonöl, versehen wurden, ist eine derartige Befeuchtung nicht notwendig, da bereits die Avivage die Faserschädigung gering und die Wiederauflösbarkeit hoch hält.

Die Kurzschnittfasem können mit einer grob arbeitenden Dosiereinrichtung, deren Genauigkeit und Gleichmäßigkeit nicht für die Herstellung von Verbundwerkstoffen geeignet wäre, die aber gegen Verstopfungen durch die Fasern nicht empfindlich ist, in die Formgebungseinrichtung eindosiert werden. Als Formgebungseinrichtung ist beispielsweise eine Flachmatrizenpresse geeignet, wobei die Fasern, zum Beispiel mittels eines Kollergangs durch eine Matrize, d. h. eine Platte mit regelmäßig angeordneten Formgebungskanälen gepresst werden.

In einer solchen Flachmatrizenpresse werden die zu pelletierenden Fasern in den Pressenraum gegeben und bilden auf der Matrize eine Materialschicht. Durch die Rollen des Kollergangs wird die Faserschicht vorverdichtet und in die Formgebungskanäle gedrückt. In diesen Formgebungskanälen findet die Verdichtung zu den Pellets statt. Der Abstand zwischen den Rollen des Kollergangs und der Matrize sollte verstellbar sein, um eine Anpassung auf unterschiedliche Fasern sowie einen Ausgleich der Materialabnutzung zu ermöglichen. In den Formgebungskanälen werden die Fasern weiter verdichtet und zu zylindrischen Strängen geformt, die unterhalb der Matrize austreten. Dort wird der Strang, beispielsweise durch ein rotierendes Messer auf die gewünschte Länge abgeschnitten und die so erhaltenen Pellets aus der Formgebungseinrichtung ausgetragen.

Um größere Mengen der erfindungsgemäßen Pellets herzustellen, ist eine sogenannte Ringmatrizenpresse noch besser geeignet als die Flachmatrizenpresse.

Die aus der Formgebungseinrichtung austretenden Presslinge können unmittelbar oder nach geeigneter Zwischenlagerung, Transport etc. mittels bekannter Dosiereinrichtungen für Granulate etc. in einen Schmelzextruder eindosiert und dort mit dem jeweiligen Matrixpolymer gemischt werden. Durch die in einem solchen Extruder auftretenden Scherkräfte werden die Presslinge schnell vollständig zerteilt und die Einzelfasern können dadurch sehr homogen im Matrixpolymer verteilt werden.

Ein zusätzlicher Vorteil der vorliegenden Erfindung besteht darin, dass aufgrund der guten Verteilung der Einzelfasern im Matrix-Polymeren eine geringere Menge an Einzelfasern notwendig ist, um die gleichen mechanischen Eigenschaften zu erzielen.

Ein weiterer Gegenstand der vorliegenden Erfindung ist daher die Verwendung von erfindungsgemäß hergestellten Presslingen zur Herstellung von Verbundmaterialien durch Einmischen in eine Polymerschmelze. Bevorzugt erfolgt diese Einmischung in einem entsprechend ausgerüsteten Extruder oder Kneter. Geeignete Apparate hierfür sowie geeignete Dosiereinrichtungen sind dem Fachmann bekannt. Als Dosiereinrichtungen eignen sich vor allem gravimetrisch arbeitende, für Granulate ausgelegte Geräte, beispielsweise gravimetrische Schneckendosierer.

Im Folgenden wird die Erfindung anhand eines Beispiels beschrieben. Die Erfindung ist jedoch ausdrücklich nicht auf dieses Beispiel beschränkt, sondern umfasst auch alle anderen Ausführungsformen, die auf dem gleichen erfinderischen Konzept beruhen.

### Beispiel 1 (Vergleichsbeispiel):

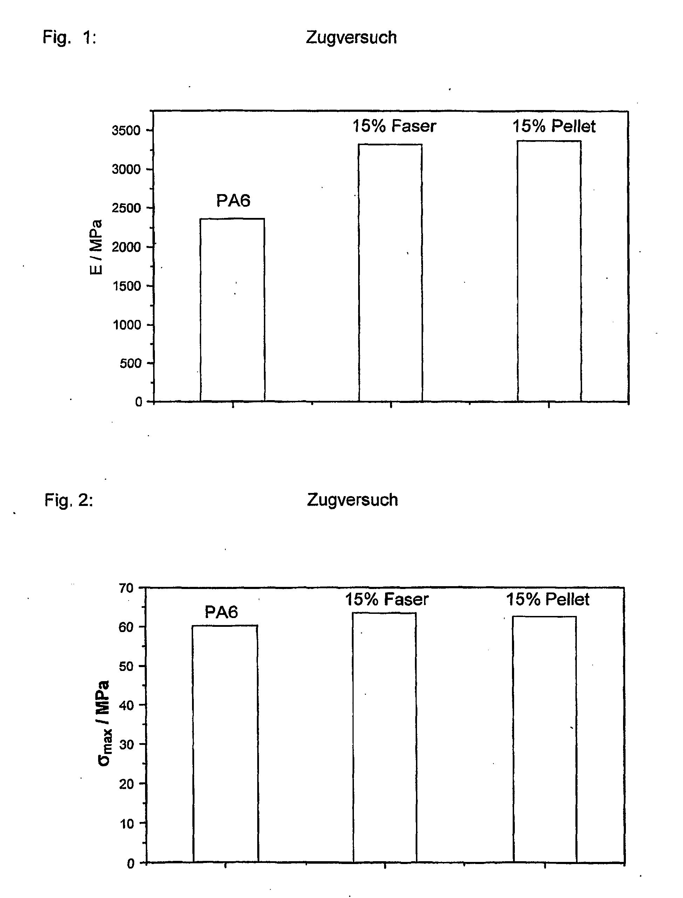

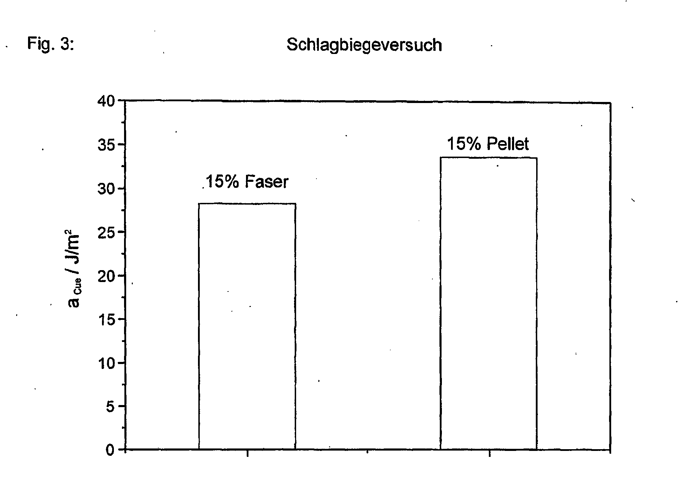

Lyocellfasern mit einem Titer von 2,8 dtex wurden auf die bekannte Weise ersponnen und im Faserkabel gewaschen, nachbehandelt, mit einer Standard- Textilavivage behandelt und getrocknet. Erst im getrockneten Zustand wurden diese Fasern mit einer Guillotine-Schneidmaschine auf eine Stapellänge von 5 mm geschnitten. Dadurch wurden sogenannte Stapel erhalten. Das sind Faserbündel, die an der Schnittstelle durch die Schneidmaschine so weit verpresst sind, dass sich ein gewisser Zusammenhalt der Einszelfasern ergibt. Diese Stapel ließen sich zwar deutlich schlechter dosieren als die erfindungsgemäß hergestellten Pellets, aber eine Dosierung war mit der eingesetzten Versuchsvorrichtung immerhin grundsätzlich möglich. Diese Stapel wurden daher ohne zwischengeschaltetes Verpressen bei ansonsten gleichbleibenden Versuchsbedingungen in den Schmelzextruder dosiert und Probekörper für Zugversuche hergestellt. Tabelle 1 sowie die Figuren 1-3 zeigen die Messergebnisse ("Faser").

Dieser Vergleichsversuch ohne Pelletierung wurde in einer Versuchsanlage durchgeführt, um einen quantitativen Vergleich hinsichtlich z. B. der Faserschädigung durch das erfindungsgemäße Verfahren machen zu können. Es muss ausdrücklich betont werden, dass diese Faserstapel für eine großtechnische Verarbeitung in der Kunststoffindustrie nicht geeignet sind, da beispielsweise die Dosierung nicht über übliche Standardschnecken erfolgt und wegen der geringen Schüttdichte der Fasern im Durchsatz stark begrenzt ist. Die Dosierung dieser Faserstapel ist gravimetrisch nicht durchführbar, so dass mit einer konstanten Dosierschneckendrehzahl und somit einer inhärenten Ungleichmäßigkeit der Dosierung gearbeitet werden muss. Diese Art der Dosierung ist daher sehr wenig praktikabel, was eine Umsetzung in der Kunststoffindustrie ausschließt.

### Beispiel 2:

Wie in Beispiel 1 wurden Lyocellfasern mit einem Titer von 2,8 dtex ersponnen und Stapel mit einer Länge von 5 mm hergestellt.

Die Stapel wurden durch Besprühen mit Wasser auf einen Wassergehalt von 50 % befeuchtet, von Hand in eine Flachmatrizenpresse des Herstellers Fa. Amandus Kahl, Hamburg eingefüllt und dort zu Presslingen geformt. Die Matrizenplatte dieser Formgebungseinrichtung wies 240 Formgebungskanäle mit einem Durchmesser von 4 mm und einem UD-Verhältnis von 1,5:/1 auf. Dementsprechend wurden Presslinge mit einem Durchmesser von 4 mm sowie einer Länge zwischen 2 mm und 6 mm erhalten.

Diese Presslinge wurden mittels einer gravimetrischen Zweischneckendosierung (Typ Process Control, Granulatschnecke d = 20mm) in einen Doppelschneckenextruder (Thermo-Prism TSE24HC) eindosiert und dort bei einer Maximaltemperatur von 220 °C mit einem Durchsatz von 10 kg/h und bei einer Schneckendrehzahl von 400 U/min mit zuvor aus Granulat aufgeschmolzenem Polyamid-6 (Typ Durethan B30S von Lanxess) gemischt. Das Mengenverhältnis betrug 15 Gew.-% reine Cellulose (vorgetrocknete Cellulose, max. 2% Wassergehalt) zu 85 Gew.-% Polyamid. Aus dem erhaltenen Verbundmaterial wurden mittels Spritzguss Universalprüfkörper (ISO-3167) für Zugversuche (ISO-527) und Schlagbiegeversuche (ISO-179) hergestellt. Tabelle 1 sowie die Figuren 1 - 3 zeigen die Messergebnisse von Zug- und Schlagbiegeversuchen ("Pellet").

Die Versuchsergebnisse zeigen deutlich, dass die Pelletierung der Fasern keinen nennenswerten Einfluss auf die Eigenschaften der Fasern im Verbund (E-Modul, maximale Dehnung) zeigt, also insbesondere keine nennenswerte Schädigung der Fasern. Der geringe Unterschied in der Festigkeit liegt unter 2% und ist somit ebenfalls vernachlässigbar. Auffallend ist die höhere Schlagzähigkeit bei den Verbundwerkstoffen aus den Pellets, was durch die gleichmäßigere Verteilung der Fasern in dem Matrixpolymer erklärt werden kann. Zum Vergleich sind die Werte für einen Probekörper aus dem reinen PA-6 der Beispiele 1 und 2 in die Diagramme für die Zugversuche (Fig. 1 und Fig. 2) eingefügt. Im Schlagbiegeversuch bricht PA-6 nicht ungekerbt. Daher ist in diesem Diagramm (Fig. 3) kein Wert für reines PA-6 dargestellt.

Weitere Versuche mit Pellets mit einer Länge von 12 mm und einem Durchmesser von 8 mm, also ebenfalls einem L/D-Verhältnis von 1,5:/1, die ebenfalls in einer Flachmatrizenpresse hergestellt worden waren, ergaben vergleichbare Ergebnisse.

Zusammenfassend kann gesagt werden, dass die Pelletierung über die Flachmatrizenpresse die Verarbeitung erleichtert, das diese Pellets mit Standardequipment der Kunststofftechnik gut verarbeitbar sind, wodurch auch eine Prozessoptimierung hinsichtlich Wirtschaftlichkeit (maximaler Durchsatz) und Produktqualität ermöglicht wird.

**Tabelle 1**

| **Cellulose** | **PA6** | **E/MPa** | **σMax/MPa** | **ε/%** | **aCue/kJ/m²** |
|---|---|---|---|---|---|
| 15wt% Faser | 85wt% | 3322 | 63,54 | 4,56 | 28,29 |
| 15wt% Pellet | 85wt% | 3368 | 62,53 | 4,74 | 33,63 |
| 0wt% | 100wt% | 2357 | 60,29 | 16,9 | - |

## Patentansprüche

1. Pressling aus cellulosischen Spinnfasern, wobei die Spinnfasern einen Titer im Bereich 0,1 bis 15,0 dtex und eine Schnittlänge im Bereich 0,5 bis 15,0 mm aufweisen und der Pressling einen Durchmesser von 2,0 bis 10,0 mm aufweist, **dadurch gekennzeichnet, dass** der Pressling durch Pressen der Spinnfasern durch Formgebungskanäle in einer Formgebungseinrichtung hergestellt wurde.

2. Pressling gemäß Anspruch 1, in dem die Spinnfasern eine Gleitavivage enthalten.

3. Pressling gemäß einem der vorstehenden Ansprüche, wobei die Spinnfasern Lyocell-, Viskose- oder Modalfasern oder eine Mischung aus mindestens zwei dieser Faserarten sind.

4. Pressling gemäß einem der vorstehenden Ansprüche, der zwischen 0,01 und 5,0 Gew.-% Schmelzkleber enthält.

5. Verfahren zur Herstellung von Presslingen aus cellulosischen Spinnfasern mit einem Titer im Bereich 0,1 bis 15,0 dtex und einer Schnittlänge im Bereich 0,5 bis 15,0 mm **dadurch gekennzeichnet, dass** die Spinnfasern in einer Formgebungseinrichtung durch Formgebungskanäle gepresst werden.

6. Verfahren gemäß Anspruch 5, wobei das L/D-Verhältnis der Formgebungskanäle zwischen 1:1 und 4:1, bevorzugt zwischen 1:1 und 3:1 beträgt.

7. Verfahren gemäß Anspruch 5, wobei die Formgebungseinrichtung eine Flachmatrizenpresse oder eine Ringmatrizenpresse ist.

8. Verfahren gemäß Anspruch 5, wobei die Spinnfasern vor dem Verpressen auf eine Feuchte von 30 bis 80 Gew.-% Wasser gebracht werden.

9. Verfahren gemäß Anspruch 5, wobei die Spinnfasern vor dem Verpressen mit 0,01 bis 5,0 Gew.-% pulverförmigem Schmelzkleber vermischt werden.

10. Verwendung von Presslingen gemäß einem der vorhergehenden Ansprüche zur Herstellung von Verbundmaterialien durch Einmischen in eine Polymerschmelze.

11. Verwendung gemäß Anspruch 10, wobei die Einmischung in einem Extruder erfolgt.

12. Verwendung gemäß Anspruch 10, wobei die Einmischung in einem Kneter erfolgt.

## Claims

1. A pressed article of cellulosic staple fibers, the staple fibers having a titer within the range from 0.1 to 15.0 dtex and a cutting length within the range from 0.5 to 15.0 mm and the pressed article having a diameter from 2.0 to 10.0 mm, **characterized in that** the pressed article was produced by pressing the staple fibers through molding channels in a molding device.

2. The pressed article as claimed in claim 1, wherein the staple fibers contain a gliding finishing agent.

3. The pressed article as claimed in any of the preceding claims, wherein the staple fibers are lyocell, viscose, or modal fibers, or a blend of at least two of these fiber types.

4. The pressed article as claimed in any of the preceding claims, wherein the pressed article contains between 0.01 and 5.0% by weight of hotmelt adhesive.

5. A method for the production of pressed articles of cellulosic staple fibers that have a titer within the range from 0.1 to 15.0 dtex and a cutting length within the range from 0.5 to 15.0 mm, **characterized in that** the staple fibers are pressed through molding channels in a molding device.

6. The method as claimed in claim 5, wherein the L/D ratio of the molding channels is between 1:1 and 4:1, preferably between 1:1 and 3:1.

7. The method as claimed in claim 5, wherein the molding device is a flat die pelleting press or a ring die pelleting press.

8. The method as claimed in claim 5, wherein, prior to pressing, the staple fibers are brought to a humidity of 30 to 80% by weight of water.

9. The method as claimed in claim 5, wherein, prior to pressing, the staple fibers are mixed with 0.01 to 5.0% by weight of hotmelt adhesive in powder form.

10. A use of pressed articles as claimed in one of the preceding claims for the production of composite materials by mixing them into a polymer melt.

11. The use as claimed in claim 10, wherein the mixing takes place in an extruder.

12. The use as claimed in claim 10, wherein the mixing takes place in a kneader.

## Revendications

1. Pastille de fibres cellulosiques discontinues dont les fibres discontinues présentent un titre compris entre 0,1 et 15,0 dtex et une longueur de coupe comprise entre 0,5 et 15,0 mm, et la pastille un diamètre compris entre 2,0 et 10,0 mm, **caractérisée en ce que** la pastille a été produite par pressage des fibres dans les canaux de formage d'un dispositif de formage.

2. Pastille selon la revendication 1 dans laquelle les fibres discontinues contiennent avivage lubrifiant.

3. Pastille selon l'une des revendications ci-dessus, les fibres discontinues étant des fibres lyocell, viscose ou modal, ou un mélange d'au moins deux de ces types de fibres.

4. Pastille selon l'une des revendications ci-dessus, qui contient entre 0,01 et 5,0 % en masse de colle à fusion.

5. Procédé de fabrication de pastilles de fibres cellulosiques discontinues ayant un titre compris entre 0,1 et 15,0 dtex et une longueur de coupe comprise entre 0,5 et 15,0 mm, **caractérisé en ce que** les fibres discontinues sont pressées dans un dispositif de formage, à travers des canaux de formage.

6. Procédé selon la revendication 5, le rapport UD des canaux de formage étant compris entre 1/1 et 4/1, de préférence entre 1/1 et 3/1.

7. Procédé selon la revendication 5, le dispositif de formage étant une presse à filière plate ou une presse à filière annulaire.

8. Procédé selon la revendication 5, les fibres discontinues étant amenées, avant pressage, à une humidité comprise entre 30 et 80 % d'eau en masse.

9. Procédé selon la revendication 5, les fibres discontinues étant mélangées, avant pressage, à une quantité de colle à fusion en poudre comprise entre 0,01 et 5,0 % en masse.

10. Utilisation de pastilles selon l'une des revendications ci-dessus pour la fabrication de composites par mélange dans un polymère fondu.

11. Utilisation selon la revendication 10, le mélange étant réalisé dans une extrudeuse.

12. Utilisation selon la revendication 10, le mélange étant réalisé dans un malaxeur.
